# EUROPEAN PATENT APPLICATION

(11) **EP 4 708 659 A1**
(43) Date of publication of application: **11.03.2026**
(21) Application number: 25197861.5
(22) Date of filing: 25.08.2025
(51) Int. Cl.: H02M 3/156, H02M 1/32

(54) **SYSTEM AND METHOD FOR CONTROLLING A SWITCHING CONVERTER OPERATING IN PULSE FREQUENCY MODULATION - PFM**

(30) Priority: 10.09.2024 IT 202400020152
(71) Applicant: STMicroelectronics International N.V., 1228 Plan-les-Ouates, Geneva (CH)
(72) Inventor: ERRICO, Nicola, 20017 RHO (MI) (IT); FLORIANI, Ivan, 28012 CRESSA (NO) (IT)
(74) Representative: Studio Torta S.p.A.

(57) **Abstract**

A control unit (2) is described, for controlling a converter (1) with PFM-regulated switching operation, configured to generate a control signal (S_{c}) of the square wave type to control switching of at least one switch element (4) of the converter, having a switching period where a first time interval (Tₒₙ) and a second time interval (T_{off}) are defined, associated with a respective value, that is high or low, of the control signal (S_{c}); wherein the control unit (2) determines a constant duration of the first time interval (Tₒₙ) and also a minimum duration (T_{off_min}) of the second time interval (T_{off}), in such a way as to determine a maximum operating frequency of the converter (1). The control unit implements a detection stage (26), for detecting an anomalous current event, as a function of a count of a predetermined number (N) of temporally successive periods of the control signal (S_{c}) during which the converter (1) operates with said minimum duration (T_{off_min}) for the second time interval (T_{off}) and, consequently, with the maximum operating frequency.

## Description

### TECHNICAL FIELD

The present solution relates to a system and method for controlling a switching converter, in particular a voltage converter operating in Pulse Frequency Modulation (PFM).

### BACKGROUND

Switching converters, in particular DC/DC voltage converters, are typically controlled with a PFM regulation loop, when an operating mode with a reduced energy consumption is required, for example in the case of Power Management Integrated Circuits (PMICs).

This PFM regulation loop is implemented by a control unit of the switching converter, typically provided as an Integrated Circuit (IC), designed to generate suitable control signals to control switching of one or more switches (typically made with power transistors, for example MOSFET) and determine the converter switching operation.

As is known, the PFM regulation envisages the generation of a square wave pulse control signal, having variable frequency and alternatively a constant on-time or a constant off-time.

The most widely used control mode is the one with a regulation loop having a Constant On-Time (so-called "COT" regulation), which is the most convenient in terms of compromise between static current consumption and performance.

This regulation loop usually operates with a voltage control, comparing the regulated voltage (provided at the output of the voltage converter) with a reference voltage, for example generated by a "bandgap" reference.

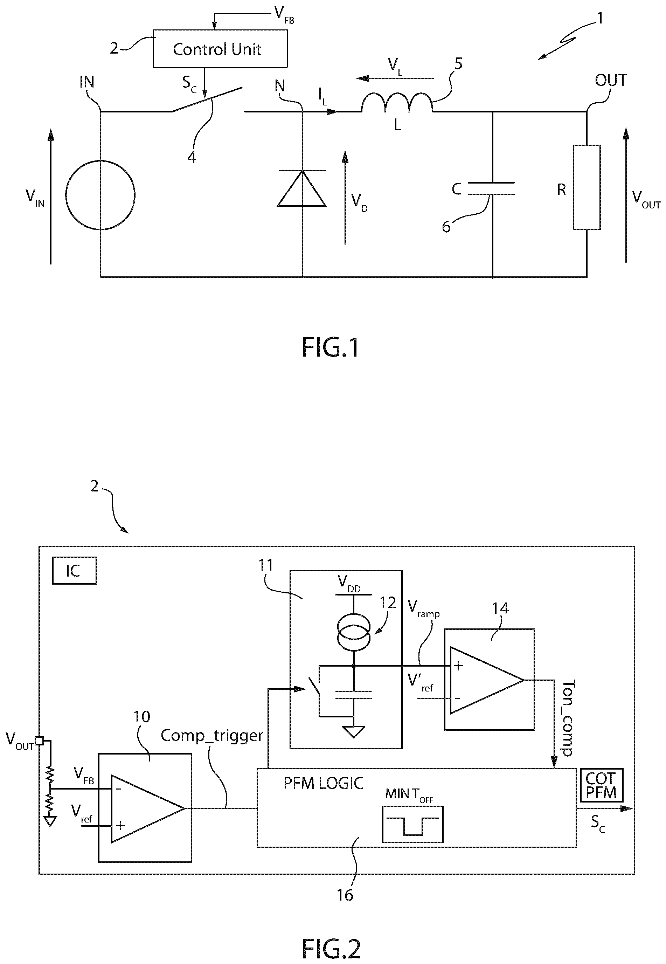

In this regard, Figure 1 shows a simplified diagram of a voltage converter 1 with switching operation, which comprises a control unit 2, configured to implement a PFM regulation logic with constant on-time voltage control.

This control unit 2 is provided as an integrated circuit and has a package with corresponding input and output pins; the integrated circuit may be mounted on a same Printed Circuit Board (PCB) with the circuit components or the respective integrated circuit of the voltage converter 1.

Purely by way of example, Figure 1 refers to a buck converter diagram, but the proposed solution is generally applicable to all types of switching converters.

The voltage converter 1 has, in this configuration: an input terminal IN, having an input voltage V_{IN} (for example a DC voltage); and an output terminal OUT, having a load (for example a resistive load, R) connected thereto and having an output voltage V_{OUT}, also a DC voltage, for example higher than the input voltage V_{IN} and regulated to a desired value.

A switch element 4, in particular a power MOSFET transistor, is connected between the input terminal IN and an internal node N; switching of the switch element 4 determines the PFM switching operation of the voltage converter and is controlled by a control signal S_{C} provided by the control unit 2.

The voltage converter 1 also comprises an inductor element 5, connected between the internal node N and the output terminal OUT; and a capacitor element 6, connected between the same output terminal OUT and a reference, or ground, terminal.

In particular, the aforementioned control signal S_{C} has a switching period (having a variable value), where a first and second time intervals are defined: a first time interval, for example an on-time T_{ON} wherein an inductor current I_{L} having and increasing value flows in the inductor element 5; and a second time interval, for example an off-time T_{OFF}, wherein the inductor current I_{L} has a decreasing value.

A voltage divider (not illustrated here), coupled to the output terminal OUT, provides a feedback voltage V_{FB}, as a function of the value of the output voltage V_{OUT}, to the control unit 2, which is configured to implement appropriate control logics based on this feedback voltage V_{FB}.

Figure 2 shows a possible simplified implementation of the control unit 2 (provided as an integrated circuit, IC), which implements a PFM control logic, for example having a constant on-time (COT) and voltage control.

In particular, the control unit 2 in this case comprises a comparator stage 10, which receives at an input the aforementioned feedback voltage V_{FB} (from a resistive divider) and also a reference voltage V_{ref} and provides at an output a trigger signal Comp_trigger as a function of the comparison (in particular, having a high value, '1', in the event that the feedback voltage V_{FB} falls below the reference voltage V_{ref}).

The control unit 2 also comprises a first definition stage 11, in this case for the definition of the on-time Tₒₙ, configured to define, in this example, the constant duration of the on-time Tₒₙ, starting from the instant of switching (to the high value) of the aforementioned trigger signal Comp_trigger.

In particular, the first definition stage 11 comprises a ramp generator 12 (of a known type, not described in detail herein), configured to generate a ramp voltage Vᵣₐₘₚ, with an increasing value starting from the aforementioned switching instant; and a respective comparator stage 14, configured to receive the ramp voltage Vᵣₐₘₚ and also a respective reference voltage V'_{ref} to output a time reference signal T_{on_comp}, indicative of reaching the (constant) predetermined duration for the on-time Tₒₙ.

The control unit 2 also comprises a PFM logic stage 16, which receives at input the aforementioned trigger signal Comp_trigger and the time reference signal T_{on_camp} and is configured to generate the control signal S_{C} provided to the switch element 4, for the PFM regulation in COT mode.

During operation, the comparator stage 10 compares the value of the regulated output voltage with the reference voltage V_{ref}; when the trigger signal Comp_trigger is activated, the control signal S_{C} is set to "1" for a fixed time defined by the on-time Tₒₙ (in turn defined by the aforementioned first definition stage 11).

The described regulation loop therefore does not intrinsically have any information on the load current of the converter.

In such converters, the implementation of some diagnosis on the output quantities is normally required, in particular the monitoring of an overcurrent (OVC) to protect both the circuits powered by the converter and the same converter in the event of a fault.

Unlike a current-mode regulation loop, where overcurrent limitation is intrinsically provided by the control action, the implementation of additional circuit stages to detect overcurrent faults or anomalous events is therefore required for a voltage regulation loop. Such circuit stages may for example implement a comparator that compares the current flowing in the switch with a threshold generated based on a reference that is a scaled copy of the same switch.

Since COT regulation is normally implemented for low-consumption applications, where static current consumption and efficiency for very low loads are key requirements, it is clear that implementing such additional circuit stages affects both of these requirements, also entailing an unwanted increase in area occupation.

A need is thus certainly felt for implementing a control of a switching converter operating in PFM mode, that may allow to obtain in a simpler and less resource-intensive manner monitoring of a current provided to a load.

### SUMMARY

The present solution generally aims to overcome the limitations of known control systems and to provide an answer to the aforementioned need.

According to the present solution, a system and a method for controlling a switching converter are therefore provided, as defined in the attached claims.

### BRIEF DESCRIPTION OF THE FIGURES

For a better understanding of the present invention, a preferred embodiment thereof is now described, purely by way of non-limiting example and with reference to the attached drawings, wherein:
- Figure 1 is a schematic block diagram of a voltage converter with switching operation;
- Figure 2 is a simplified block diagram of a control unit of the switching converter of Figure 1;
- Figure 3 is a block diagram of a PFM logic stage implemented in a control unit of a switching converter operating in PFM, according to an aspect of the present solution;
- Figure 4 shows diagrams of quantities associated with the operation of the PFM logic stage of Figure 3;
- Figure 5 is a flow chart of operations performed by the PFM logic stage;
- Figure 6 shows a possible implementation of a detection stage for detection of an anomalous current event in the PFM logic stage, according to an embodiment of the present solution; and
- Figure 7 shows diagrams of quantities associated with the operation of the detection stage of Figure 6.

### DESCRIPTION OF EMBODIMENTS

As will be described below, one aspect of the present solution envisages using the peculiar characteristics of a PFM regulation loop (previously described for a constant on-time regulation, but what will be described applies similarly to the case of a constant off-time regulation) to implement a current monitoring at the output of a switching converter, in particular a detection of an anomalous current event (for example, an overcurrent or a short circuit event, depending on the operating mode, DCM - Discontinuous Conduction Mode or CCM - Continuous Conduction Mode, of the same converter).

In particular, in discontinuous conduction mode (DCM), by defining a constant duration for a first time interval associated with the PFM modulation control signal, for example the on-time Tₒₙ, and also by defining a minimum duration of the second time interval associated with the same control signal, in the example the off-time T_{off}, the maximum switching frequency and therefore the maximum output current capacity may be defined. By monitoring the condition in which the converter operates at the maximum frequency, therefore at the minimum duration of the off-time T_{off}, an overcurrent detection with a negligible impact on the current consumption may be implemented.

In continuous conduction mode (CCM), the output current level does not depend on the switching frequency and therefore in this case the current is not limited by setting a minimum duration for the off-time T_{off}. However, the same diagnosis used in DCM mode to detect an overcurrent condition may also be used in CCM mode to detect a rapid variation in the switching frequency of the PFM regulation loop, which might for example occur in case of a high variation (or in any case a variation outside intervals associated with a normal operation) of the load current, caused, for example, by a short circuit.

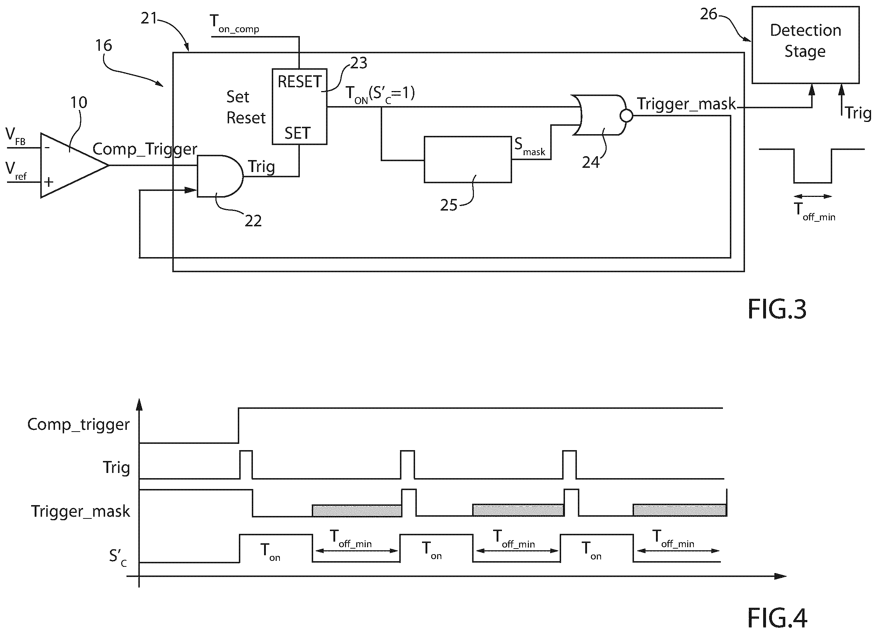

In detail, with reference to Figure 3, a possible implementation is described for a PFM logic stage, again indicated by 16, of a control unit of a switching converter operating in PFM (for example, of the aforementioned control unit 2 of the voltage converter 1, described with reference to Figures 1 and 2).

This implementation generally envisages defining the aforementioned minimum duration for the second time interval, in the example the off-time T_{off}, therefore indicated hereinafter as T_{off_min}, in such a way as to correspondingly define a maximum frequency for the switching operation of the voltage converter 1 (and at a same time, in case of DCM operation, a maximum limit to the current capacity).

The aforementioned PFM logic stage 16 comprises a second definition stage 21 for defining the aforementioned minimum duration T_{off_min} (or, similarly, the aforementioned maximum operating frequency), which receives at an input the trigger signal Comp_trigger provided by the comparator stage 10 and also the time reference signal T_{on_comp}, indicative of the completion of the (constant) predetermined duration for the first time interval, in the example the on-time Tₒₙ, provided at output by the first definition stage 11 (here not illustrated).

This second definition stage 21 comprises an AND logic gate element 22, which receives, at a first input, the aforementioned trigger signal Comp_trigger and, at a second input, a masking signal Trigger_mask, which is designed to mask the same trigger signal Comp_trigger (i.e. to cause this signal not to be effective) until at least the aforementioned minimum duration T_{off_min} has elapsed from the end of the first time interval, in the example of the on-time Tₒₙ.

The AND logic gate element 22 thereby provides at its output an effective trigger signal Trig (as a result of the aforementioned masking operation).

In essence, and as also illustrated by the plots in Figure 4, the masking signal Trigger_mask effectively allows to define the aforementioned minimum duration T_{off_min} of the second time interval, in the example of the off-time T_{off}, before the end of which the possible presence of the trigger signal Comp_trigger (in this example, always high) is therefore not considered.

In greater detail, the second definition stage 21 comprises a set/reset flip-flop element 23, which receives, at a reset input, the aforementioned time reference signal T_{on_comp} and, at a set input, the aforementioned effective trigger signal Trig; the set/reset flip-flop element 23 then provides at its output a command signal S_{c}' (see also the aforementioned Figure 4), i.e. a square wave signal with a high value ('1') for the (constant) duration of the on-time Tₒₙ and a low value ('0') at least for the aforementioned minimum duration T_{off_min}.

The second definition stage 21 also comprises a NOR logic gate element 24, having a first input which receives the aforementioned command signal S_{c}' and a second input which receives a mask signal Sₘₐₛₖ provided by a minimum duration definition element 25 (for example a counter, or a filter). In particular, this mask signal Sₘₐₛₖ has a high value ('1') starting from the switching to the low value ('0') of the command signal S_{c}' and for a duration equal to the aforementioned minimum duration T_{off_min}.

Consequently, the NOR logic gate element 24 provides at its output the aforementioned masking signal Trigger_mask, having a low value ('0') during the aforementioned minimum duration T_{off_min}, thus allowing the presence of the trigger signal Comp_trigger to be "masked" (in other words, causing the same trigger signal Comp_trigger not to be effective until the minimum duration T_{off_min} is reached).

As shown in the aforementioned Figure 3, the PFM logic stage 16 of the control unit 2 further comprises a detection stage 26, coupled to the aforementioned second definition stage 21 to receive the masking signal Trigger_mask and the effective trigger signal Trig and configured to detect an anomalous current event (i.e., an overcurrent or short circuit event, depending on the DCM - Discontinuous Conduction Mode, or CCM - Continuous Conduction Mode, operating mode), as a function of monitoring operations carried out starting from the same masking signal Trigger_mask and effective trigger signal Trig.

In particular, as will be described in detail, such monitoring operations envisage, using the information provided by the aforementioned second definition stage 21, performing a count, by means of a suitable anomalous event counter, of a predetermined number N of temporally successive, in particular consecutive, periods of the control signal S_{c} (provided by the control unit 2 and which determines the PFM switching operation of the same voltage converter 1), during which the switching converter operates with the aforementioned minimum duration T_{off_min} for the second time interval; and determining an anomalous current event if the count reaches such predetermined number N, consequently inhibiting the switching operation of the converter and protecting both the inner circuit and the outer components from dangerous current levels.

Furthermore, in the event that, during monitoring, a period is determined in which the duration of the second time interval is greater than the aforementioned minimum duration T_{off_min}, the aforementioned anomalous event counter is decremented or reset.

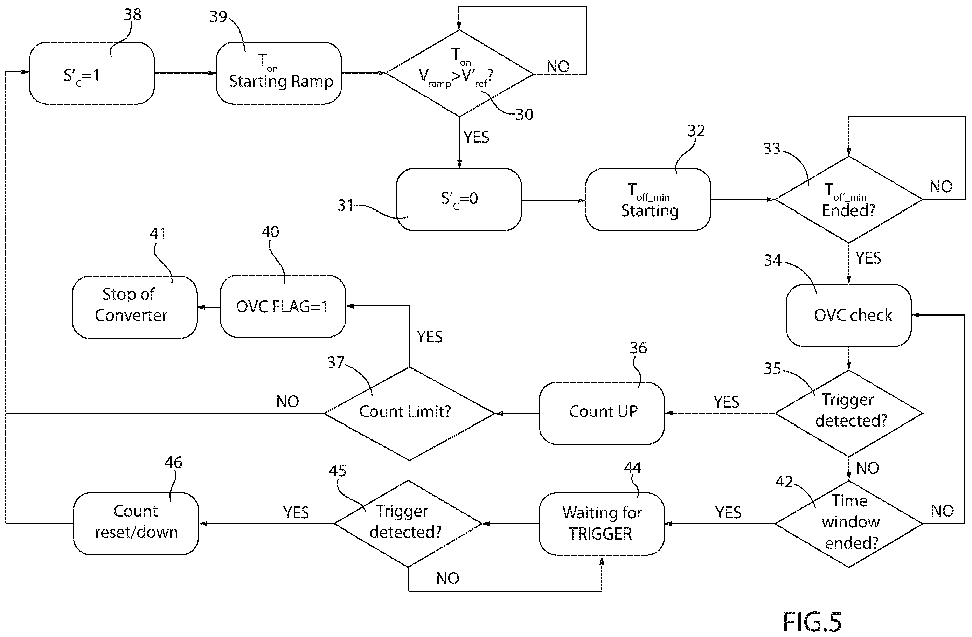

With reference to Figure 5, the monitoring operations performed by the control unit 2 of the voltage converter 1, in particular by the corresponding PFM logic stage 16, for detecting anomalous current events, are now described in greater detail.

In an initial block, indicated by 30, a check is envisaged of the on-time Tₒₙ, having in the example a constant duration (as previously discussed, this check envisages the comparison between the ramp voltage Vᵣₐₘₚ and the respective reference voltage V'_{ref}).

Once this constant duration has ended, the command signal S_{c}' (at the output of the set-reset flip-flop element 23) goes to the low value '0', as indicated in block 31.

Consequently, at block 32, the check of the minimum duration T_{off_min} of the second time interval is started, in the example corresponding to the off-time T_{off}.

Once it is determined, as shown in block 33, that this minimum duration T_{off_min} has elapsed, the check for detecting anomalous current events is implemented, as indicated in block 34.

In particular, if, at an end instant of the aforementioned minimum duration T_{off_min} (and, as discussed below, within a monitoring time window immediately consecutive to such end instant) the presence of a pulse of the effective trigger signal Trig (which determines the start of the successive on-time Tₒₙ) is detected, as indicated in block 35, the count of the anomalous event counter is incremented, block 36.

Subsequently, at block 37, it is checked whether the same anomalous event counter has reached the count limit (corresponding to the aforementioned predetermined number N).

In the event that this count limit has not been reached, output 'NO' from the aforementioned block 37, the method proceeds to a new ON-event, with the control signal assuming a high value '1', as indicated in block 38, entailing the resulting start of the on-time Tₒₙ, block 39 (from which the method returns, in a cyclical or iterative manner, to the aforementioned block 30).

In the event that the count limit has instead been reached, output 'YES' from the aforementioned block 37, the occurrence of an anomalous current event is determined.

For example, an overcurrent detection flag (OVC flag) is then set to '1', as indicated in block 40; and the switching operation of the voltage converter 1 is also stopped or inhibited, as indicated in block 41, for example until a successive reboot or restart of the same voltage converter 1.

In the event that, instead, the presence of the effective trigger signal Trig is not detected in the aforementioned block 35, the monitoring envisages, as previously indicated, waiting for the end of a monitoring time window, as indicated in block 42.

At the end of this monitoring time window (without a pulse of the effective trigger signal Trig having been detected), the method thus moves to blocks 44 and 45, waiting for the arrival of a subsequent pulse of the same effective trigger signal Trig; after which, as indicated in block 46, the count of the aforementioned anomalous event counter is decremented (or, depending on the needs and the effective applications in which the voltage converter 1 is used, is reset) .

The anomalous event counter is thus decremented, or reset, in the event that it is determined, during monitoring (and the aforementioned count by the anomalous event counter), that the switching converter does not operate in a subsequent operating cycle with the minimum duration T_{off_min} for the second time interval.

From the aforementioned block 46 the method goes again to block 38, to wait for a new ON-event, as previously described.

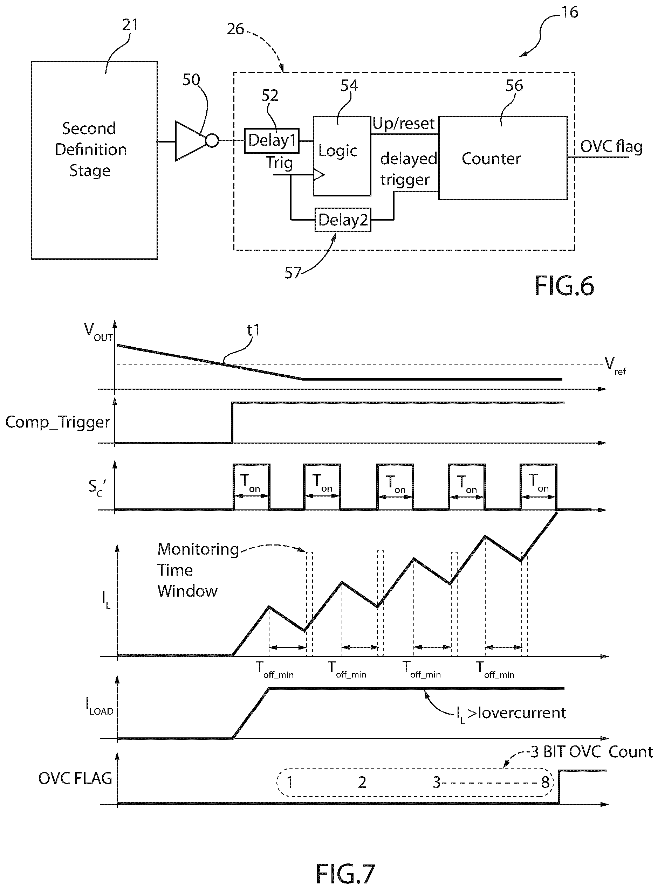

With reference to Figure 6, a possible implementation of the aforementioned detection stage 26 of the control unit 2 is now described, made by means of asynchronous logic.

In this implementation, the detection stage 26 is coupled to the output of the second definition stage 21 by means of the interposition of an inverter element 50, connected between the output of the aforementioned NOR logic gate element 24 (not illustrated here) and the input of the same detection stage 26.

In detail, the detection stage 26 comprises: a first delay logic element 52, connected to the input of the same detection stage 26 and configured to implement the aforementioned monitoring time window (in which the state of the effective trigger signal Trig is monitored); and a logic stage 54 (for example a two-state flip-flop with clock), which has a signal input connected to the output of the first delay logic element 52 and a clock input receiving the aforementioned effective trigger signal Trig.

This logic stage 54 is configured to provide at its output an up or down (or reset) count signal depending on whether or not the change in state of the effective trigger signal Trig occurs within the monitoring time window.

The detection stage 26 also comprises a counter element 56, for example a three-bit incremental counter (in the purely exemplary case in which the aforementioned predetermined number N of consecutive periods is equal to eight), which receives at a command input the aforementioned up or down/reset count signal provided at the output of the logic stage 54 and also has a clock input. This clock input is coupled to the output of a second delay logic element 57, which receives the effective trigger signal Trig and implements an appropriate time delay, to allow its propagation towards the counter element 56, where it is used as a clock signal determining the effective increment or decrement/reset of the count.

The same counter element 56 is also configured to provide at its output the count signal, which may in particular determine the switching to the high value, '1', of the aforementioned anomalous current event detection flag (OVC flag), in the event that the count reaches the maximum count threshold (as indicated, for example equal to eight).

The plots of Figure 7 illustrate the operation previously described, in a case in which an anomalous current event determines, for example, an output short circuit and the output voltage V_{OUT} of the voltage converter is therefore below the reference voltage V_{ref}, starting from a certain time instant t1.

The example refers to a switching control with constant duration of the on-time Tₒₙ and continuous conduction mode, CCM.

In particular, it is highlighted that, due to the aforementioned short circuit, the inductor current I_{L} continues to rise and the load current I_{LOAD} is above an overcurrent condition.

In this condition, the high value of the effective trigger signal Trig within the monitoring time window (highlighted in Figure 7) following the end of the minimum duration T_{off_min} associated with the off-time T_{off} determines the increment of the count signal for the predetermined number N of consecutive periods of the control signal (in the example equal to eight), consequently determining the switching of the flag indicative of the anomalous current event and the application of appropriate protection measures for the voltage converter 1, for example to determine its switching-off.

The advantages of the proposed solution are clear from the preceding description.

In any case, it is again underlined that the solution described allows to obtain an increase in safety in monitoring the operation of the voltage converter, ensuring the implementation of a diagnosis of/protection from anomalous current events, in particular with overcurrent (OVC) control and current limitation in DCM mode or detection of large load variations (for example due to short circuits) in CCM mode.

The solution described also does not have an additional consumption of static current and has a negligible impact on the dimensions and area occupation.

Furthermore, the solution described allows the implementation of a self-diagnosis, without impacting the test time of the converter. For example, by exploiting the counter, the PFM logic stage 16 (in particular the corresponding second definition stage 21 and the corresponding detection stage 26) may be automatically tested.

Finally, it is clear that modifications and variations may be made to what has been described and illustrated herein without thereby departing from the scope of the present invention, as defined in the attached claims.

In particular, it is underlined that the proposed solution may also be applied in the case of different types of PFM control and regulation loops (in particular with a constant off-time T_{off}), in this case the solution being able to be implemented with a minimum duration T_{on_min} of the on-time Tₒₙ.

Furthermore, in general, the solution described may find advantageous application for any type of DC/DC switching converter operating in PFM regulation mode.

## Claims

1. A control unit (2), for controlling a converter (1) with PFM-regulated switching operation, configured to generate a control signal (S_{c}) of the square wave type to control switching of at least one switch element (4) of the converter (1), having a switching period where a first time interval (Tₒₙ) and a second time interval (T_{off}) are defined, associated with a respective value, that is high or low, of the control signal (S_{c}); wherein said control unit (2) is configured to determine a constant duration of said first time interval (Tₒₙ) and also to determine a minimum duration (T_{off_min}) of said second time interval (T_{off}), in such a way as to determine a maximum operating frequency of said converter (1),
**characterized by** comprising a detection stage (26), configured to detect an anomalous current event, as a function of a count of a predetermined number (N) of temporally successive periods of the control signal (S_{c}), during which said converter (1) operates with said minimum duration (T_{off_min}) for the second time interval (T_{off}) and, consequently, with maximum operating frequency.

2. The control unit according to claim 1, wherein said anomalous current event is an overcurrent or a short circuit event, depending on the operating mode, DCM - Discontinuous Conduction Mode, or respectively CCM - Continuous Conduction Mode, of the converter (1).

3. The control unit according to claim 1 or 2, configured to inhibit the switching operation of the converter (1) if the count reaches said predetermined number (N).

4. The control unit according to any of the preceding claims, wherein said detection stage (26) is configured to detect an anomalous current event, as a function of a count of a predetermined number (N) of temporally consecutive periods of the control signal (S_{c}) during which said converter (1) operates with said minimum duration (T_{off_min}) for the second time interval (T_{off}).

5. The control unit according to any of the preceding claims, comprising: a first definition stage (11) for definition of the first time interval (Tₒₙ), configured to define the constant duration thereof, starting from the switching instant of a trigger signal (Comp_trigger); and a second definition stage (21) for definition of said minimum duration (T_{off_min}) or, similarly, of said maximum operating frequency, configured to receive at an input the trigger signal (Comp_trigger) and also a time reference signal (T_{on_comp}), indicative of reaching the constant duration for the first time interval (Tₒₙ), provided by the first definition stage (11).

6. The control unit according to claim 5, wherein said second definition stage (21) comprises an AND logic gate element (22), configured to receive at a first input said trigger signal (Comp_trigger) and at a second input a masking signal (Trigger_mask), designed to mask said trigger signal (Comp_trigger) until said minimum duration (T_{off_min}) has elapsed from the end of the first time interval (Tₒₙ), and to provide at an output an effective trigger signal (Trig), resulting from said masking operation.

7. The control unit according to claim 6, wherein said detection stage (26) is configured to: increment said count in the event that the presence of a pulse of said effective trigger signal (Trig) is detected within a monitoring time window at, and immediately subsequent to, the end of the aforementioned minimum duration (T_{off_min}); and, once said monitoring time window has elapsed without the presence of a pulse of the effective trigger signal (Trigger) being detected, decrement, or reset, said count at a successive pulse of said effective trigger signal (Trig).

8. The control unit according to claim 6 or 7, wherein said detection stage (26) is configured to detect said anomalous current event, as a function of a monitoring of said effective trigger signal (Trig) and said masking signal (Trigger_mask).

9. The control unit according to claim 8, wherein said detection stage (26) comprises: a first delay logic element (52), configured to implement said monitoring time window during which the state of the effective trigger signal (Trig) is monitored; and a logic stage (54), having a signal input connected to the output of the first delay logic element (52) and a clock input receiving the aforementioned effective trigger signal (Trig) and configured to provide at an output an up or down, or reset, count signal depending on whether or not the change in state of the effective trigger signal (Trig) occurs within the monitoring time window.

10. The control unit according to claim 9, wherein said detection stage (26) further comprises a counter element (56), configured to implement the count of said predetermined number (N), which receives at a command input said up, or down or reset, count signal provided by the logic stage (54) and has a clock input coupled to the output of a second delay logic element (57), which receives at an input said effective trigger signal (Trig).

11. The control unit according to claim 9 or 10, wherein said detection stage (26) is implemented by means of asynchronous logic using said effective trigger signal (Trig) as a clock signal.

12. The control unit according to any of claims 5-11, comprising a comparator stage (10), configured to receive at an input a feedback voltage (V_{FB}) indicative of an output voltage (V_{OUT}) generated by said converter (1) and a reference voltage (V_{ref}) and to provide at an output said trigger signal (Comp_trigger) as a function of a corresponding comparison.

13. A converter (1), of the switching type, comprising the control unit (2) according to any of the preceding claims.

14. A control method, for controlling a converter (1) with PFM-regulated switching operation, comprising: generating a control signal (S_{c}) of the square wave type to control switching of at least one switch element (4) of the converter (1), having a switching period where a first time interval (Tₒₙ) and a second time interval (T_{off}) are defined, associated with a respective value, that is high or low, of the control signal (S_{c}); determining a constant duration of said first time interval (Tₒₙ); and also determining a minimum duration (T_{off _min}) of said second time interval (T_{off}), in such a way as to define a maximum operating frequency of said converter (1),
**characterized by** detecting an anomalous current event, as a function of a count of a predetermined number (N) of temporally successive periods of the control signal (S_{c}) during which said converter (1) operates with said minimum duration (T_{off_min}) for the second time interval (T_{off}) and, consequently, with said maximum operating frequency.

15. The method according to claim 14, comprising inhibiting the switching operation of the converter (1) if the count reaches said predetermined number (N).
